(19) **Europäisches Patentamt / European Patent Office / Office européen des brevets**

(11) **EP 1 878 708 B1**

(12) **EUROPEAN PATENT SPECIFICATION**

(45) Date of publication and mention of the grant of the patent:
**03.08.2011 Bulletin 2011/31**

(51) Int Cl.:
***C03B 37/018*** *(2006.01)*

(21) Application number: **07012076.1**

(22) Date of filing: **20.06.2007**

(54) **Method for manufacturing an optical preform by means of an internal vapour deposition process, as well as a preform obtained thereby**

Verfahren zur Herstellung einer optischen Vorform mittels eines internen Dampfabscheidungsverfahrens sowie damit hergestellte Vorform

Procédé pour la fabrication d'une préforme optique au moyen d'un procédé de dépôt de vapeurs internes, ainsi que la préforme obtenue selon ce procédé

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.07.2006 NL 1032140**

(43) Date of publication of application:
**16.01.2008 Bulletin 2008/03**

(73) Proprietor: **Draka Comteq B.V.**
**1083 HJ Amsterdam (NL)**

(72) Inventors:
• **Deckers, Rob Hubertus Matheus**
**5643 KB Eindhoven (NL)**
• **Terpsma, Jelle Philip**
**5652 EN Eindhoven (NL)**

(74) Representative: **op den Brouw-Sprakel, Vera Stefanie Irene et al**
**Algemeen Octrooi- en Merkenbureau**
**P.O. Box 645**
**5600 AP Eindhoven (NL)**

(56) References cited:
EP-A- 1 396 554          FR-A1- 2 575 151
JP-A- 56 078 440         US-A1- 2003 115 909
US-A1- 2005 000 253    US-A1- 2005 041 943

**Description**

The present invention relates to a method for manufacturing an optical preform by means of an internal vapour deposition process, wherein use is made of an energy source and a substrate tube having a supply side and a discharge side, wherein the energy source is movable over the length of the substrate tube between a point of a reversal at the supply side and a point of a reversal at the discharge side, wherein one or more glass-forming precursors, which may or may not be doped, are supplied to the interior of the substrate tube at the supply side of the substrate tube, and wherein components that have not been deposited on the interior of the substrate tube are discharged at the discharge side of the substrate tube, wherein such conditions are created in the interior of the substrate tube that deposition of glass layers on the interior of the substrate tube takes place, wherein an outer cladding is deposited first and then an inner cladding.

Such a method is known, for example from US patent No. 4,741,747, which mentions as important parameters of the deposition process: reproducibility, the yield of the chemical reaction between the glass-forming precursors, the deposition rate and the optical and geometric homogeneity of the material deposited on the interior of the substrate tube. During the deposition process, however, so-called deposition zones where the optical and geometric properties are not sufficiently constant can be distinguished at both ends of the substrate tube. It is known that in deposition processes the length of such deposition zones, also called "end tapers", may amount to about 15% of the total length of the substrate tube. Such a taper would lead to an axially non-uniform cross-section of the core after an optical fibre has been drawn from the preform; the taper in particular forms an area in which the optical and/or geometric properties of the preform are not uniform. Said non-uniformity will lead to a degradation in the transmission qualities of the optical fibre. Consequently, such taper areas in the preform are not used when manufacturing an optical fibre. Since such taper areas make up a significant part of the preform tube, the total fibre length that can be obtained from a preform is rather limited. To prevent the occurrence of taper in an optical preform, the aforesaid US patent proposes to move the energy source, in particular a plasma, nonlinearly as a function of time in the area of at least one of the points of reversal, or to change the power of the plasma over the length of the substrate tube as a function of time. After all, previously a so-called stationary velocity profile of the resonator was used for depositing the layers on the interior of the substrate tube.

From US patent No. 5,188,648 a method for reducing the taper area is known wherein the reciprocating movement of the plasma is interrupted at the point of reversal at the supply side of the glass-forming precursors, with the duration of said interruption being set so that an effective reduction of the taper area at the so-called gas side of the substrate tube is effected. Said document is in particular aimed at reducing the geometric taper of the core of the optical preform.

From US patent No. 5,145,509 a method for reducing the geometric taper is known wherein a glass rod is placed in the centre of the substrate tube, the radius of which rod is set so that it amounts to maximally 0.67 and minimally 0.2 times the internal radius of the glass substrate tube, wherein the glass rod is removed from the interior of the substrate tube upon completion of the deposition process, after which the hollow substrate tube is contracted into a solid preform under elevated temperature conditions.

From US patent No. 4,944,244 a method for manufacturing optical preforms is known wherein the power of the energy source is continuously controlled during the deposition process on the basis of a signal which is a function of, among other factors, the degree to which deposition of glass layers on the interior of the substrate tube takes place.

US 2005/0041943 relates to a deposition method wherein the plasma is moved along the hollow substrate tube and is changed in a first end region adjacent to a reversal point, both as a function of time in the deposition process and as a function of position in the first end region, wherein the end point of the first end region coincides with the reversal point and wherein the starting point is located further away from the reversal point than the deceleration point, said first end region having a length that suffices to reduce the taper in the preform.

EP 1 396 554 relates to a plasma-activated CVD system wherein electromagnetic power of a microwave is fed from antennas provided in an inner periphery portion of an annular waveguide into a reaction chamber disposed inside the waveguide, allowing plasma to be generated in the interior of the reaction chamber, and a film is formed.

US 2003/0115909 relates to a method of making an optical fiber preform assembly comprising:

forming a plasma inside a tube, thereby forming a plasma zone: and
introducing a flow of at least one precursor suitable for forming glass into the plasma zone, wherein said flow comprises eddy diffusion of the flow of the precursor.

The prior art discloses methods for manufacturing preforms wherein the optimisation of the geometric taper has led to the formation of an optical taper, and vice versa.

It is an aspect of the present invention to provide a method for manufacturing an optical preform by means of an internal vapour deposition process, wherein both the geometric taper and the optical taper are minimised.

Another aspect of the present invention is to provide a method for manufacturing an optical preform by means of an internal vapour deposition process, from which optical preform a single mode optical fibre (type, core, inner and outer cladding) having a stable cutoff wavelength can be produced.

Yet another aspect of the present invention is to provide a method for manufacturing an optical preform by means of an internal vapour deposition process, wherein the diameter of the layers deposited on the interior of the substrate tube has a constant value over the length of the substrate tube, such that the negative influence of the presence of OH-groups in the area at the outer side of the deposited layers is minimised.

Yet another aspect of the present invention is to provide a method for manufacturing an optical preform by means of an internal vapour deposition process, wherein a maximum length of the preform itself can be used for producing an optical fibre.

The method as mentioned in the introduction is characterised in that the velocity of the energy source for the deposition of the inner cladding is set so that the acceleration of the energy source near the point of reversal at the supply side for depositing the inner cladding is higher than the acceleration of the energy source near the point of reversal at the supply side for depositing the outer cladding.

Although the term "acceleration" is used herein, it should be understood that this term is meant to include also the deceleration, viz. a negative acceleration, that takes place when the energy source is being moved from the discharge side to the point of reversal at the supply side. When such a velocity of the energy source is used for depositing both the inner cladding and the outer cladding, the inner cladding is optimised for optical parameters, such as the refractive index, which applies in particular when the cladding layers are doped. After all, a cladding layer built up of pure $SiO_2$ will not exhibit any optical taper. The geometric taper of said inner cladding that occurs therewith is compensated by the special deposition conditions of the outer cladding to such an extent that the so-called ratio b/a, wherein

a = the core diameter
b = the (inner + outer) cladding outer diameter

is constant over substantially the entire length of the substrate tube.

The present inventors have furthermore found that the effect of a substantially constant ratio b/a on the attenuation, in particular the attenuation at a wavelength of 1385 nm that is ascribed to the influence of OH-groups, is practically constant over the length of the preform, whilst at the same time the stability of the cutoff wavelength over the length of the substrate tube has been improved. Based on the perception that it is desirable to optimise the inner cladding for optical parameters and subsequently compensate the resulting geometric taper of said inner cladding, with a so-called geometric taper of the outer cladding, it has appeared to be possible to maintain a constant value for the ratio b/a over substantially the entire length of the substrate tube.

In a special embodiment, the distance between the supply side and the discharge side for depositing the inner cladding is preferably larger than the distance between the supply side and the discharge side for depositing the outer cladding, wherein said distance is to be understood to be the length over which the velocity of the energy source is substantially constant.

With regard to preventing the occurrence of the so-called "end taper" it is preferable if the velocity of the energy source at the discharge side is substantially the same for the deposition of the outer cladding as for the deposition of the inner cladding.

Based on the present method it has appeared to be possible to obtain a uniform cutoff wavelength over the entire length of the optical fibre to be made from such a preform. In addition to that the present inventors have found that the so-called OH peak, viz. the attenuation at a wavelength of 1385 nm, is uniform over substantially the entire length of the optical fibre.

In a special embodiment, the velocity of the energy source during the deposition of the outer cladding may be increased while the energy source is moving in the direction of the discharge side, after the acceleration thereof at the supply side, whilst in addition to that the velocity of the energy source during the deposition of the inner cladding may also be increased while the energy source is moving in the direction of the discharge side, after the acceleration thereof at the supply side.

To obtain a high deposition rate as well as a reproducible deposition method, it is desirable to use a resonator for generating plasma as the energy source.

The present invention further relates to an optical preform obtained by carrying out the method as described above, wherein the ratio b/a is constant over the length of the preform, wherein:

a = the core diameter

b = the (inner + outer) cladding outer diameter and further characterised by the characterising part of claim 8.

The present invention further relates to an optical fibre as defined in the appended claims. The present invention in particular relates to single mode optical fibres comprising a core which is directly surrounded by an inner cladding, which inner cladding is directly surrounded by an outer cladding. In principle each type of fibre in which two or more adjacent rings are present is suitable, wherein at least one ring must be optimised for optical properties and at least one other ring must be optimised for geometric properties.

Specifically for a 2-layer single mode profile the following limits subsequently apply as regards the outer diameter (in the fibre):

$$12 < b' < 30 \ [\mu m]$$

$$15 < b < 60 \ [\mu m],$$

wherein

b' = the inner cladding outer diameter,
b = the outer cladding outer diameter.

For a single mode optical fibre, the diameter of the core (a) approximately equals 9 $\mu$m. This gives:

$$1.3 < b'/a < 3.3$$

$$1.7 < b/a < 6.7.$$

The present invention will be explained hereinafter by means of a number of examples, in which connection it should be noted, however, that the present invention is by no means limited to such special examples. Special embodiments are furthermore defined in the appended claims.

Example

Figure 1 shows a velocity profile of the energy source according to the present method.

Figure 2 shows the difference in the refractive index as a function of the length of a preform.

Figure 3 shows the cross-sectional area both of the inner cladding and of the outer cladding as a function of the length of the preform.

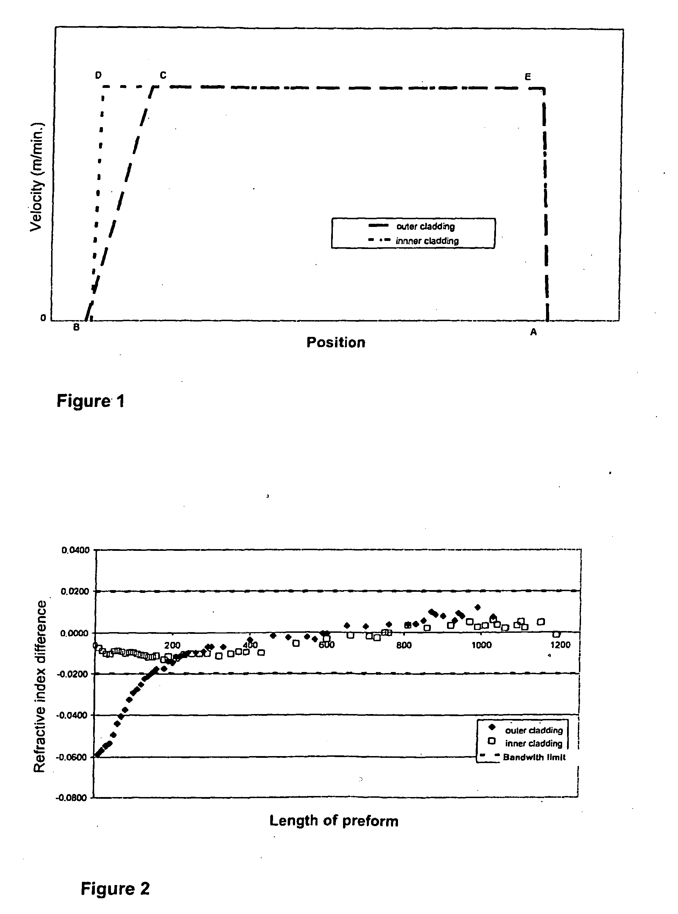

Figure 1 is a schematic representation of the deposition process as carried out in accordance with the present method, in which the velocity profile for the deposition of the inner cladding as well as of the outer cladding is schematically shown. At the beginning of the deposition process, the outer cladding is deposited on the interior of the substrate tube, whilst the energy source is reciprocated over the substrate tube between points A and B. It will be understood that the interior of the substrate tube may already be provided with one or more layers, such as previously deposited buffer layers, which may or may not be doped. When the energy source is located at point of reversal B, viz. at the supply side of the substrate tube, the velocity of the energy source is subsequently increased to a maximum velocity, indicated at C. Then the velocity of the energy source in the direction of point of reversal A is kept substantially constant, and at point of reversal A the velocity of the energy source will again be practically zero, with deceleration taking place near point E. To form the outer cladding it is usual in practice to go n times through the velocity profile shown in figure 1, with n (integer) ranging from 100-1000, or even higher. After the outer cladding has been deposited on the interior of the hollow substrate tube according to such a velocity profile, the inner cladding is subsequently deposited on the outer cladding that is already present in the interior of the substrate tube. The deposition process of the inner cladding takes place according to a velocity profile that is essentially different from that of the deposition process of the outer cladding.

Near point of reversal B, which is located at the supply side of the substrate tube, the velocity of the energy source is increased very quickly to a level D, whereupon the energy source is further moved in the direction of point of reversal A, during which movement the velocity is kept substantially constant.

Near point E the velocity of the energy source is reduced to zero at point of reversal A, after which the energy source will subsequently returned to point of reversal B according to the velocity profile that is shown in figure 1, and vice versa.

Figure 2 shows the relative refractive index difference as a function of the length of the preform obtained by using the method shown in figure 1. From figure 2 it directly follows that the refractive index difference, measured in relation to the refractive index value in the centre of the preform, both of the inner cladding and of the outer cladding is set so that the refractive index difference ranges within a desired bandwidth of + 0.0017 and - 0.017 over substantially the entire length of the preform, i.e. 90 % of the length of the preform, especially 95 % of the length of the preform. From figure 2 it follows that the optimisation has taken place over the inner cladding, whilst the optical deviation of the outer cladding has not resulted in optical fibre rejects. A suitable bandwidth is a value of maximally $\pm$ 0.02. The relative refractive index difference shown in figure 2 is defined as follows:

Figure 2 shows the relative refractive index difference (y-axis) as a function of the length of the preform (x-axis). Said relative difference is defined as follows:

$$\Delta_{RI,z} = 100 * \frac{n_{measured} - n_{reference}}{n_{reference}}$$

wherein:

$n_{reference}$ = the average refractive index in the centre of the preform,
$n_{measured}$ = the measured refractive index at position z.

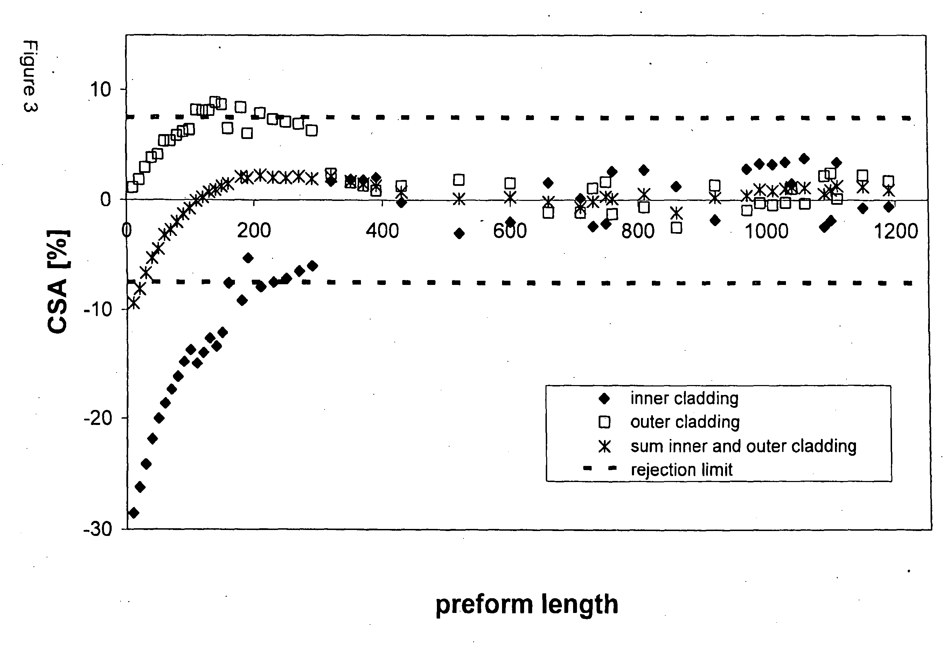

In figure 3 the relative difference of the amount of deposited material of the inner cladding and the outer cladding (y-axis) is schematically represented as a function of the length of the preform (x-axis), from which it also appears that the sum of the relative differences of the amount of deposited material of the inner cladding and the outer cladding ranges within a desired bandwidth, in particular maximally $\pm$ 7.5%, over substantially the entire length of the preform, i.e. 90 % of the length of the preform, especially 95 % of the length of the preform. The relative difference is measured by comparing the area of a particular section, measured on the basis of the inner diameter and the outer diameter of such a section, with that of the area in the centre of the preform, viz:

$$\Delta_{CSA,z} = \frac{CSA_z - CSA_{ref}}{CSA_{ref}} \times 100\%$$

wherein:

$CSA_z$ = the Cross Sectional Area at position z
$CSA_{ref}$ = the average CSA in the centre of the preform

CSA is defined as:

$$CSA = \frac{\pi}{4} \times \left(d_u^2 - d_i^2\right)$$

$d_u$ = the outer diameter of the layer
$d_i$ = the inner diameter of the layer.

The present inventors have thus found that they can manufacture an optical preform by optimising the inner cladding for optical parameters and subsequently compensating the resulting geometric taper of said inner cladding, in such a manner that the ratio b/a, wherein b is the diameter of the total cladding and a is the diameter of the core, is substantially constant over the entire length of the preform. When such a method is used, it is possible to keep the deposition time as short as possible without adversely affecting the optical performance of the optical fibre obtained from a preform thus produced, in particular the attenuation caused by OH groups.

The inventors have furthermore found that the cutoff wavelength is substantially uniform over the length of the optical fibre when such a method is used. The present inventors have moreover found that if a constant b/a is aimed at, the value of the so-called OH peak at a wavelength of 1385 nm will be substantially uniform over the length of the optical fibre of the single mode type comprising at least an inner cladding and an outer cladding surrounding a core.

**Claims**

1. A method for manufacturing an optical preform by means of an internal vapour deposition process, wherein use is made of an energy source and a substrate tube having a supply side and a discharge side, wherein the energy source is movable over the length of the substrate tube between a point of a reversal at the supply side and a point of a reversal at the discharge side, wherein one or more glass-forming precursors, which may or may not be doped, are supplied to the interior of the substrate tube at the supply side of the substrate tube, and wherein components that have not been deposited on the interior of the substrate tube are discharged at the discharge side of the substrate tube, wherein such conditions are created in the interior of the substrate tube that deposition of glass layers on the interior of the substrate tube takes place, wherein an outer cladding is deposited first and then an inner cladding, **characterised in that** the velocity of the energy source for the deposition of the inner cladding is set so that the acceleration of the energy source near the point of reversal at the supply side for depositing the inner cladding is higher than the acceleration of the energy source near the point of reversal at the supply side for depositing the outer cladding.

2. A method according to claim 1, **characterised in that** the distance between the supply side and the discharge side for depositing the inner cladding is larger than the distance between the supply side and the discharge side for depositing the outer cladding, wherein said distance is to be understood to be the length over which the velocity of the energy source is substantially constant.

3. A method according to either one of the preceding claims, **characterised in that** the velocity of the energy source at the discharge side is substantially the same for the deposition of the outer cladding as for the deposition of the inner cladding.

4. A method according to any one or more of the preceding claims, **characterised in that** the velocity of the energy source during the deposition of the outer cladding is increased while the energy source is moving in the direction of the discharge side, after the acceleration thereof at the supply side.

5. A method according to any one or more of the preceding claims, **characterised in that** the velocity of the energy source during the deposition of the inner cladding is increased while the energy source is moving in the direction of the discharge side, after the acceleration thereof at the supply side.

6. A method according to any one or more of the preceding claims, **characterised in that** the acceleration of the energy source at the discharge side for deposition of both the outer cladding and the inner cladding is higher than the acceleration of the energy source at the supply side for deposition of the inner cladding.

7. A method according to any one or more of the preceding claims, **characterised in that** a resonator for generating a plasma is used as the energy source.

8. An optical preform obtained by carrying out a method as defined in any one or more of the preceding claims, wherein the ratio b/a is constant over the length of the preform, wherein:

   a = the core diameter
   b = the (inner + outer) cladding outer diameter and

   **characterised in that** the sum of the relative differences of the amount of deposited material of the inner cladding and the outer cladding is maximally $\pm$ 7.5% for 90 % of the total length of a preform, wherein:

$$\Delta_{CSA,z} = \frac{CSA_z - CSA_{ref}}{CSA_{ref}} \times 100\%$$

wherein:

$CSA_z$ = the Cross Sectional Area at position z
$CSA_{ref}$ = the average CSA in the centre of the preform CSA is defined as:

$$CSA = \frac{\pi}{4} \times \left( d_u^2 - d_i^2 \right)$$

$d_u$ = the outer diameter of the layer
$d_i$ = the inner diameter of the layer.

**9.** An optical preform according to claim 8, **characterised in that** for 90 % of the total length of a preform the relative refractive index difference of the inner cladding is maximally 0.02, wherein said relative difference is defined as:

$$\Delta_{RI,z} = 100 * \frac{n_{measured} - n_{reference}}{n_{reference}}$$

wherein:

$n_{reference}$ = the average refractive index in the centre of the preform,
$n_{measured}$ = the measured refractive index at position z.

**10.** A preform according to any one or more of the claims 8-9 **characterised in that** for a single mode profile the ratio inner cladding outer diameter : core has a value that ranges from 1.3 to 3.3.

**11.** A preform according to any one or more of the claims 8-9 **characterised in that** for a single mode profile the ratio outer cladding outer diameter : core has a value of 1.7 - 6.7.

**12.** An optical fibre obtained from a preform according to any one or more of the claims 8-11 **characterised in that** the outer diameter of the inner cladding ranges from 12 to 30 $\mu$m.

**13.** An optical fibre obtained from a preform according to any one or more of the claims 8-12 **characterised in that** the outer diameter of the outer cladding ranges from 15 to 60 $\mu$m.

**Patentansprüche**

**1.** Verfahren zur Herstellung eines optischen Vorformlings mittels eines inneren Dampfabscheidungsprozesses, wobei eine Energiequelle und ein Substratrohr mit einer Zuführseite und einer Austragseite verwendet werden, wobei die Energiequelle über die Länge des Substratrohrs zwischen einem Umkehrpunkt an der Zuführseite und einem Umkehrpunkt an der Austragseite bewegbar ist, wobei ein oder mehrere Glas bildende Vorläuferstoffe, die dotiert sein können oder auch nicht, dem Inneren des Substratrohrs an der Zuführseite des Substratrohrs zugeführt werden, und wobei Bestandteile, die nicht auf das Innere des Substratrohrs abgeschieden wurden, an der Austragseite des Substratrohrs ausgetragen werden, wobei im Inneren des Substratrohrs solche Bedingungen erzeugt werden, dass auf dem Innenbereich des Substratrohrs eine Abscheidung von Glasschichten stattfindet, wobei zuerst ein äußerer Mantel und dann ein innerer Mantel abgeschieden wird, **dadurch gekennzeichnet, dass** die Geschwindigkeit der Energiequelle zur Abscheidung des inneren Mantels so eingestellt wird, dass die Beschleunigung der Energiequelle nahe des Umkehrpunkts an der Zuführseite beim Abscheiden des inneren Mantels höher ist als die Beschleunigung der Energiequelle nahe des Umkehrpunkts an der Zuführseite beim Abscheiden des äußeren Mantels.

2. Verfahren nach Anspruch 1, **dadurch gekennzeichnet, dass** der Abstand zwischen der Zuführseite und der Austragseite beim Abscheiden des inneren Mantels größer ist als der Abstand zwischen der Zuführseite und der Austragseite beim Abscheiden des äußeren Mantels, wobei unter dem Abstand die Länge zu verstehen ist, über der die Geschwindigkeit der Energiequelle im Wesentlichen konstant ist.

3. Verfahren nach einem der vorhergehenden Ansprüche, **dadurch gekennzeichnet, dass** die Geschwindigkeit der Energiequelle an der Austragseite bei der Abscheidung des äußeren Mantels im Wesentlichen genau so hoch ist wie bei der Abscheidung des inneren Mantels.

4. Verfahren nach einem oder mehreren der vorhergehenden Ansprüche, **dadurch gekennzeichnet, dass** die Geschwindigkeit der Energiequelle während der Abscheidung des äußeren Mantels zunimmt, während sich die Energiequelle nach deren Beschleunigung an der Zuführseite in Richtung zur Austragseite bewegt.

5. Verfahren nach einem oder mehreren der vorhergehenden Ansprüche, **dadurch gekennzeichnet, dass** die Geschwindigkeit der Energiequelle während der Abscheidung des inneren Mantels zunimmt, während sich die Energiequelle nach deren Beschleunigung an der Zuführseite in Richtung zur Austragseite bewegt.

6. Verfahren nach einem oder mehreren der vorhergehenden Ansprüche, **dadurch gekennzeichnet, dass** die Beschleunigung der Energiequelle an der Austragseite bei der Abscheidung des äußeren Mantels wie auch des inneren Mantels höher ist als die Beschleunigung der Energiequelle an der Zuführseite bei der Abscheidung des inneren Mantels.

7. Verfahren nach einem oder mehreren der vorhergehenden Ansprüche, **dadurch gekennzeichnet, dass** als Energiequelle ein Resonator zur Erzeugung eines Plasmas verwendet wird.

8. Optischer Vorformling, der erhalten wird, indem ein wie in einem oder mehreren der vorhergehenden Ansprüche definiertes Verfahren ausgeführt wird, wobei das Verhältnis b/a über die Länge des Vorformlings konstant ist, wobei:

a = Kerndurchmesser
b = Außendurchmesser des (inneren + äußeren) Mantels und
**dadurch gekennzeichnet, dass** die Summe der relativen Unterschiede bezüglich der Menge an abgeschiedenem Material des inneren Mantels und des äußeren Mantels für 90% der Gesamtlänge eines Vorformlings höchstens ± 7,5% beträgt, wobei

$$\Delta CSA_z = \frac{CSA_z - CSA_{ref}}{CSA_{ref}} * 100\%$$

worin:

$CSA_z$ = Querschnittsfläche an einer Position z
$CSA_{ref}$ = gemittelte CSA in der Mitte des Vorformlings
und CSA definiert ist als:

$$CSA = \frac{\pi}{4} * (d_u^2 - d_i^2)$$

d<sub>u</sub> = Außendurchmesser der Schicht

$d_u$ = Außendurchmesser der Schicht

$d_i$ = Innendurchmesser der Schicht

**9.** Optischer Vorformling nach Anspruch 8, **dadurch gekennzeichnet, dass** für 90% der Gesamtlänge eines Vorformlings der relative Brechungsindexunterschied des inneren Mantels höchstens 0,02 beträgt, wobei dieser relative Unterschied definiert ist als:

$$\Delta_{RI,z} = 100 * \frac{n_{gemessen} - n_{referenz}}{n_{referenz}}$$

worin:

$n_{Referenz}$ = mittlerer Brechungsindex in der Mitte des Vorformlings,
$n_{gemessen}$ = gemessener Brechungsindex an einer Position z.

**10.** Vorformling nach einem oder mehreren der Ansprüche 8 bis 9, **dadurch gekennzeichnet, dass** für ein Singlemode-Profil das Verhältnis Außendurchmesser des inneren Mantels : Kern einen Wert im Bereich von 1,3 bis 3,3 hat.

**11.** Vorformling nach einem oder mehreren der Ansprüche 8 bis 9, **dadurch gekennzeichnet, dass** für ein Singlemode-Profil das Verhältnis Außendurchmesser des äußeren Mantels : Kern einen Wert von 1,7 bis 6,7 hat.

**12.** Optische Faser, die aus einem Vorformling nach einem oder mehreren der Ansprüche 8 bis 11 erhalten wird, **dadurch gekennzeichnet, dass** der Außendurchmesser des inneren Mantels 12 bis 30 μm beträgt.

**13.** Optische Faser, die aus einem Vorformling nach einem oder mehreren der Ansprüche 8 bis 12 erhalten wird, **dadurch gekennzeichnet, dass** der Außendurchmesser des äußeren Mantels 15 bis 60 μm beträgt.

## Revendications

**1.** Procédé de fabrication d'une préforme optique par un procédé de dépôt en phase vapeur interne, dans lequel on utilise une source d'énergie et un tube de substrat ayant un côté d'alimentation et un côté d'évacuation, dans lequel la source d'énergie est mobile sur la longueur du tube de substrat entre un point d'inversion du côté d'alimentation et un point d'inversion du côté d'évacuation, dans lequel un ou plusieurs précurseurs de formation du verre, qui peuvent être dopés ou non, sont délivrés à l'intérieur du tube de substrat du côté d'alimentation du tube de substrat, et dans lequel des constituants qui n'ont pas été déposés sur l'intérieur du tube de substrat sont évacués du côté d'évacuation du tube de substrat, dans lequel il est créé à l'intérieur du tube de substrat des conditions telles qu'il se produit un dépôt de couches de verre sur l'intérieur du tube de substrat, dans lequel une gaine extérieure est tout d'abord déposée puis une gaine intérieure est déposée, **caractérisé en ce que** la vitesse de la source d'énergie pour le dépôt de la gaine intérieure est réglée de telle manière que l'accélération de la source d'énergie à proximité du point d'inversion du côté d'alimentation pour le dépôt de la gaine intérieure, soit supérieure à l'accélération de la source d'énergie à proximité du point d'inversion du côté d'alimentation pour le dépôt de la gaine extérieure.

**2.** Procédé selon la revendication 1, **caractérisé en ce que** la distance entre le côté d'alimentation et le côté d'évacuation pour le dépôt de la gaine intérieure est supérieure à la distance entre le côté d'alimentation et le côté d'évacuation pour le dépôt de la gaine extérieure, dans lequel ladite distance doit être comprise comme étant la longueur sur laquelle la vitesse de la source d'énergie est sensiblement constante.

**3.** Procédé selon l'une quelconque des revendications précédentes, **caractérisé en ce que** la vitesse de la source d'énergie du côté d'évacuation est sensiblement identique pour le dépôt de la gaine extérieure à ce qu'elle est pour le dépôt de la gaine intérieure.

**4.** Procédé selon l'une quelconque ou plusieurs des revendications précédentes, **caractérisé en ce que** la vitesse de la source d'énergie pendant le dépôt de la gaine extérieure est augmentée pendant que la source d'énergie se déplace dans la direction du côté d'évacuation, après son accélération du côté d'alimentation.

**5.** Procédé selon l'une quelconque ou plusieurs des revendications précédentes, **caractérisé en ce que** la vitesse de la source d'énergie pendant le dépôt de la gaine intérieure est augmentée pendant que la source d'énergie se déplace dans la direction du côté d'évacuation, après son accélération du côté d'alimentation.

**6.** Procédé selon l'une quelconque ou plusieurs des revendications précédentes, **caractérisé en ce que** l'accélération de la source d'énergie du côté d'évacuation pour déposer à la fois la gaine extérieure et la gaine intérieure est plus élevée que l'accélération de la source d'énergie du côté d'alimentation pour le dépôt de la gaine intérieure.

**7.** Procédé selon l'une quelconque ou plusieurs des revendications précédentes, **caractérisé en ce qu'**un résonateur destiné à générer un plasma est utilisé en tant que source d'énergie.

**8.** Préforme optique obtenue en mettant en oeuvre un procédé selon l'une quelconque ou plusieurs des revendications précédentes, dans lequel le rapport b/a est constant sur la longueur de la préforme, où :

a = diamètre de l'âme
b = diamètre extérieur de la gaine (intérieure + extérieure), et
**caractérisée en ce que** la somme des différences relatives entre les quantités de matériau déposé pour former la gaine intérieure et la gaine extérieure est au maximum de $\pm 7,5$ % sur 90 % de la longueur totale d'une préforme, où :

$$\Delta_{CSA,z} = \frac{CSA_z - CSA_{ref}}{CSA_{ref}} \times 100\%$$

où :
$CSA_z$ = superficie de la section transversale à la position z
$CSA_{ref}$ = CSA moyenne au centre de la préforme
CSA étant défini par :

$$CSA = \frac{\pi}{4} \times \left( d_u^2 - d_i^2 \right)$$

du = diamètre extérieur de la couche
$d_i$ = diamètre intérieur de la couche.

**9.** Préforme optique selon la revendication 8, **caractérisée en ce que**, sur 90 % de la longueur totale d'une préforme, la différence relative entre les indices de réfraction de la gaine intérieure est au maximum de 0,02, ladite différence relative étant définie par :

$$\Delta_{RI,z} = 100 * \frac{n_{mesuré} - n_{référence}}{n_{référence}}$$

où :

$n_{référence}$ = indice de réfraction moyen au centre de la préforme,
$n_{mesuré}$ = indice de réfraction mesuré à la position z.

**10.** Préforme selon l'une quelconque ou plusieurs des revendications 8 et 9, **caractérisée en ce que** pour un profil monomode, le rapport diamètre extérieur de la gaine intérieure:âme a une valeur se situant dans l'intervalle de 1,3 à 3,3.

11. Préforme selon l'une quelconque ou plusieurs des revendications 8 et 9, **caractérisée en ce que** pour un profil monomode, le rapport diamètre extérieur de la gaine extérieure:âme a une valeur de 1,7 à 6,7.

12. Fibre optique obtenue à partir d'une préforme selon l'une quelconque ou plusieurs des revendications 8 à 11, **caractérisée en ce que** le diamètre extérieur de la gaine intérieure se situe dans l'intervalle de 12 à 30 $\mu$m.

13. Fibre optique obtenue à partir d'une préforme selon l'une quelconque ou plusieurs des revendications 8 à 12, **caractérisée en ce que** le diamètre extérieur de la gaine extérieure se situe dans l'intervalle de 15 à 60 $\mu$m.

**Figure 1**

**Figure 2**

Figure 3

**REFERENCES CITED IN THE DESCRIPTION**

**Patent documents cited in the description**

- US 4741747 A
- US 5188648 A
- US 5145509 A
- US 4944244 A
- US 20050041943 A
- EP 1396554 A
- US 20030115909 A